# EUROPÄISCHE PATENTSCHRIFT

(11) **EP 2 225 927 B1**
(45) Veröffentlichungstag und Bekanntmachung des Hinweises auf die Patenterteilung: **24.04.2013**
(21) Anmeldenummer: 10401023.6
(22) Anmeldetag: 11.02.2010
(51) Int. Cl.: A01C 7/04

(54) **Pneumatische Einzelkornsämaschine**
Pneumatic single grain sowing machine
Semoir monograine pneumatique

(30) Priorität: 17.02.2009 DE 102009009278
(43) Veröffentlichungstag der Anmeldung: 08.09.2010
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Mertens, Daniel, 26123 Oldenburg (DE)

(56) Entgegenhaltungen:
- DE-A1-102007 007 868
- FR-A1- 2 706 236
- US-A- 1 371 517

## Beschreibung

Die Erfindung betrifft eine pneumatische Einzelkornsämaschine gemäß des Oberbegriffes des Patentanspruches 1.

Eine derartige Einzelkornsämaschine ist beispielsweise in der DE 10 2007 007 868 A1 beschieben. Bei der Vereinzelungstrommel dieser Einzelkornsämaschine sind in der Trommel Durchbrüche angeordnet. In diese Durchbrüche sind in ringförmigen Trägerstreifen angeordnete Einsatzelemente eingesetzt. In den Einsatzelementen befinden sich die Perforationen, an denen sich, wenn diese mit einem Druckunterschied beaufschlagt werden, Samenkörner anlagern, wenn die Vereinzelungstrommel durch einen Saatgutvorrat geführt wird. Der Ring mit den die Perforationen aufweisenden Einsatzelementen ist aus Kunststoff hergestellt. Bei Temperaturschwankungen ist eine passgenaue Anordnung der Einsatzelemente in den Durchbrüchen der Vereinzelungstrommel nicht in ausreichendem Maße gewährleistet. Die Passgenauigkeit ist nicht ausreichend.

Der Erfindung liegt die Aufgabe zugrunde, einen Trägerstreifen mit Perforationen für eine Vereinzelungstrommel in passgenauerer Weise für einen größeren Temperaturbereich zu schaffen.

Diese Aufgabe wird erfindungsgemäß dadurch gelöst, dass der Trägerstreifen aus Federstahl besteht, dass in dem Tragerstreifen Durchbrüche mit einem mindestens zweifach größeren Querschnitt als die Perforationen angeordnet sind, dass in den Durchbrüchen des Trägerstreifens die die Perforation aufweisenden und aus einem Kunststoffmaterial bestehenden Einsatzelementen angeordnet sind. Infolge dieser Maßnahmen wird durch die Ausgestaltung des Trägerstreifens aus Federstahl in Kombination mit den aus einem Kunststoffmaterial bestehenden und die Perforationen aufweisenden Einsatzelementen einerseits eine hohe Passgenauigkeit erreicht, weil die Ausdehnungskoeffizienten der Vereinzelungstrommel die bevorzugt ebenfalls aus einem Stahlmaterial besteht, und von dem aus Federstahl bestehenden Federstreifen zumindest annähernd gleich groß sind. Und andererseits durch die Ausgestaltung der Einsatzelemente aus einem Kunststoffmaterial, die an einem einfachen Kunststofffertigungsspritzvorgang in den Trägerstreifen bzw. an diesen angebracht werden können, ein einfacher Fertigungsvorgang ermöglicht. Somit lässt sich sehr einfach und preiswert ein mit Einsatzelementen versehener Trägerstreifen für die passgenaue Anordnung von Perforationen in einer Vereinzelungstrommel herstellen.

Um eine passgenaue Anordnung und sicheren Sitz der Einsatzelemente sowohl in dem Trägerstreifen, wie auch in den Durchbrüchen der Vereinzelungstrommel in einfacher Weise zu gewährleisten, ist vorgesehen, dass die Einsatzelemente die Durchbrüche in den Trägerstreifen auf der Innen- und Außenseite mit an ihnen angeordneten Ansätzen überragen.

Um zu gewährleisten, dass für die die Druckdifferenz unterbrechende Abdeckeinrichtung eine gleichmäßige und ruhige Relativbewegung von Abdeckeinrichtung zu der Vereinzelungstrommel erreicht wird, ist vorgesehen, dass die Einsatzelemente auf der Innenseite des Trägerstreifens in Drehrichtung der Trommel formschlüssig, ineinander und in überlappender Weise zueinander angeordnet sind, und dass zwischen den ineinandergreifenden Teilbereichen der Einsatzelemente ein freier Zwischenraum vorhanden ist. Insbesondere wenn das Abdeckelement der Abdeckeinrichtung als drehbar gelagerte Rolle ausgebildet ist, wird hierdurch ein äußerst gleichmäßiger und ruhiger Lauf der sog. Lochabdeckungsrolle gewährleistet. Weiterhin wird durch den freien Zwischenraum der ineinander greifenden Teilbereiche der Einsatzelemente ermöglicht, dass der Trägerring in gestreckter Form vorliegen kann, wenn die Einsatzelemente dort in einem Kunststoffspritzgang eingespritzt werden. Somit kann dann anschließend der gestreckte Trägerstreifen zur Montage in einfacher Weise zu einem Ring geformt werden. Dadurch, dass der Trägerring aus Federstahl besteht, erhält er eine Vorspannung, so dass der aus Federstahl bestehende Trägerring die Einsatzelemente sicher in den Durchbrüchen der Vereinzelungstrommel hält. Durch den verwendeten Federstahlträgerring ist somit eine äußerst gute Maßhaltigkeit in der Länge des Trägerringes und der sichere dauerhafte Einbau gewährleistet.

Um einen sicheren Zusammenhalt des Ringes an der Trennstelle bzw. der Fügestelle zu erreichen, insbesondere bei schwierigen Einbaubedingungen, kann vorgesehen sein, dass die Enden des Trägerstreifens zur Bildung eines Ringes durch eine Formschlussverbindung formschlüssig miteinander verbindbar sind.

Um ein Verdrehen der Einsatzelemente in dem Trägerstreifen zu vermeiden, ist vorgesehen, dass die Durchbrüche in dem Trägerstreifen eine unrunde Form aufweisen. Hierdurch wird eine Drehbewegung der einzelnen Einsatzelemente in den Löchern des Trägerringes sicher unterbunden.

Weitere Einzelheiten der Erfindung sind der Beispielsbeschreibung und den Zeichnungen zu entnehmen. Hierbei zeigen
- Fig. 1: die Vereinzelungstrommel der Einzelkornsämaschine in perspektivischer Darstellung,
- Fig. 2: die Teilansicht der Anordnung des Trägerstreifens mit den Perforationen entsprechend der Einzelheit des mit X gekennzeichneten Kreis in vergrößertem Maßstab,
- Fig. 3: die Anordnung der Perforationen in der Trommel entsprechend des Ausschnittes Y in vergrößertem Maßstab,
- Fig. 4: den Trägerstreifen mit Perforationen in perspektivischer Darstellung,
- Fig. 5: den Trägerstreifen mit Perforationen in vergrößertem Maßstab und perspektivischer sowie abschnittsweiser Darstellung,
- Fig. 6: den Trägerstreifen ohne Perforationen in perspektivischer Darstellung,
- Fig. 7: ein Einsatzelement mit Perforation in perspektivischer Darstellung und
- Fig. 8: den Trägerstreifen in gestreckter Darstellung mit einigen im Trägerstreifen angeordneten aus Kunststoffmaterial bestehenden Einsatzelementen mit Perforation.

Die Vereinzelungstrommel 1 ist in nicht dargestellter Weise drehbar in einem Gehäuse unterhalb eines Saatgutvorrates einer Einzelkornsämaschine angeordnet und wird von einer Kraftquelle angetrieben. Das Gehäuse bzw. der Saatgutvorratsbehälter weisen zwei voneinander beabstandete Seitenwände auf, die sich parallel zur Bewegungsrichtung der Trommel 1 erstrecken und somit zumindest annähernd mit der Trommel 1 zusammenwirken. Die Vereinzelungstrommel 1 wird in bekannter Weise mittels eines Antriebes rotierend angetrieben. In der Vereinzelungstrommel 1 sind mehrere Perforationsreihen 2 mit beabstandet zueinander angeordneten Perforationen 3 angeordnet.

Die Perforationen 3 werden mit einer Druckdifferenz beaufschlagt, welche von einem Gebläse, welches nicht dargestellt ist, erzeugt wird. Mittels dieses Gebläses ist für die Perforationen 3 eine Druckdifferenz zwischen dem Innenraum 4 der Vereinzelungstrommel 1 und dem Außenbereich der Vereinzelungstrommel 1 zu erzeugen. Diese Druckdifferenz ist derart, so dass, wenn die Trommel 1 mit ihrer Außenseite 5 durch einen Saatgutvorrat geführt wird, sich an den Perforationen 3 auf der Außenseite 5 der Vereinzelungstrommel 1 Samenkörner anlagern. Den Perforationen 3 einer Perforationsreihe 2 ist eine von der Vereinzelungstrommel 1 zu einer Ablageeinrichtung, die beispielsweise als Säschar ausgebildet ist, führende Ausbringleitung in nicht dargestellter Weise zugeordnet.

Im Innenraum 4 der Vereinzelungstrommel 1 ist auf der der Außen- bzw. Vereinzelungsseite 5 des Vereinzelungsorgans 1 und der Perforationen 3 abgewandte Seite 6 des Vereinzelungsorgans 1 bzw. der Perforation 3, die an den Perforationen 3 anliegende Druckdifferenz zum Ablösen der Saatkörner unterbrechende Abdeckvorrichtung 7 in Form von auf einer Welle 8 angeordneten scheibenartigen Rollen 9 angeordnet. Die Abdeckeinrichtung 7 ist im Bereich der Übergabe des Saatgutes von dem Vereinzelungsorgan 1 in die nicht dargestellte Ausbringleitung angeordnet.

In der Vereinzelungstrommel 1 sind in ringförmigen Reihen 2, die beabstandet zueinander angeordnet sind, beabstandete Durchbrüche 10 angeordnet. In diese Durchbrüche 10 sind die die Perforationen 3 aufweisende Einsatzelemente 11 angeordnet.

Die Einsatzelemente 11 sind in einem Trägerstreifen 12 angeordnet. Der Trägerstreifen 12 besteht aus Federstahl. In dem Trägerstreifen 12 sind die Durchbrüche 13 angeordnet. Diese Durchbrüche 13 weisen einen mindestens zweifach größeren Querschnitt als die Perforationen 3 auf. In den Durchbrüchen 13 des Trägerreifens 12 sind die die Perforationen 3 aufweisenden und aus einem Kunststoffmaterial bestehenden Einsatzelemente 11 angeordnet. Die Einsatzelemente 11 mit den Perforationen 3 werden in einem Kunststoffspritzvorgang in dem Trägerstreifen 12 in unverlierbarer Weise angeordnet. Die Einsatzelemente 11 überragen die Durchbrüche 13 in den Trägerstreifen 12 auf der Innen- und Außenseite mit an ihnen angeordneten Ansätzen 14 und 15. Die Durchbrüche 13 in dem Trägerstreifen 12 weisen eine unrunde Form auf, somit sind die Einsatzelemente 11 in dem Trägerstreifen 12 unverdrehbar angeordnet.

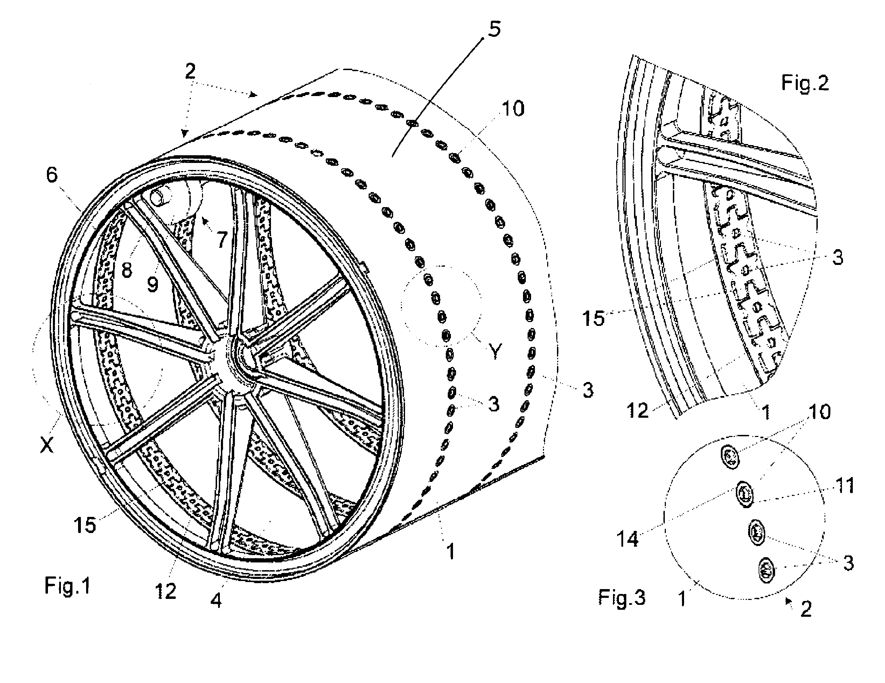

Die Ansätze 15 der Einsatzelemente 11 sind auf der Innenseite des Trägerstreifens 12, bezogen auf seine Montage in der Trommel 1 in Drehrichtung der Trommel 1 formschlüssig, ineinander und in überlappender Weise zueinander angeordnet, wie insbesondere die Fig. 1, 2 und 8 zeigen. Zwischen den ineinandergreifenden Ansätzen 15 der Einsatzelemente 11 ist ein freier Zwischenraum 16 vorhanden. Im Ausführungsbeispiel sind an den Enden 17 des Trägerstreifens 12 zur Bildung eines Ringes Elemente 18 vorhanden, so dass die Enden 17 des Trägerstreifens 12 durch eine Formschlussverbindung formschlüssig miteinander zu verbinden sind. Dieses ist jedoch nicht zwingend erforderlich.

Die Anordnung des Trägerstreifens 12 mit den Einsatzelementen 11, die die Perforationen 3 aufweisen, innerhalb der Trommel 1, so dass die auf der Außenseite des Trägerstreifens 12 diesen überragenden Ansatzelemente 14 in die Durchbrüche 10 in der Tommel 1 fassen, erfolgt folgendermaßen:

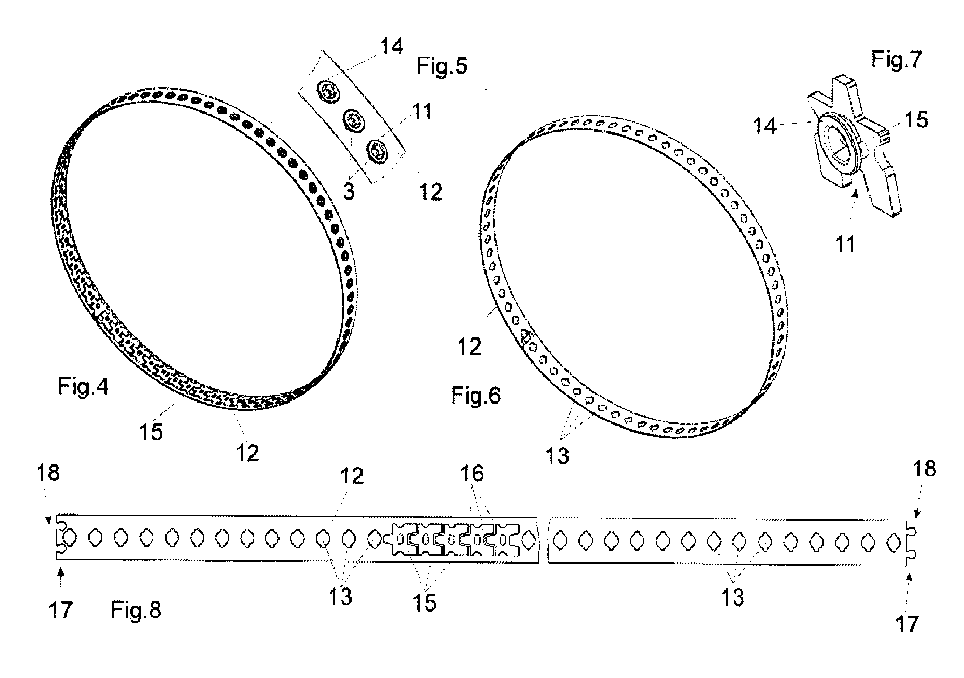

Wie bereits erwähnt, werden in einem Kunststoffspritzvorgang die Einsatzelemente 11, die aus Kunststoffmaterial bestehen, an dem Trägerstreifen 12 unverlierbar angebracht. Wenn die Trägerstreifen 12 mit den Einsatzelementen 11, die die Perforationen 3 aufweisen, in die Trommel 1 montiert werden sollen, werden die in gestreckter Form vorliegenden Trägerstreifen 12 zu einem Ring geformt, wie Fig. 4 zeigt. Dieser Ring, wird noch etwas weiter zusammengezogen, so dass er einen kleineren Außendurchmesser als den Innendurchmesser der Trommel 1 aufweist. Anschließend wird der Trägerstreifenring 12 in Position gebracht, so dass die auf der Außenseite des Trägerstreifens 12 sich befindlichen Ansätze 14 der Einsatzelemente 11 in die Durchbrüche 10 der Trommel 1 passen. Aufgrund der Federeigenschaften des aus Federstahl bestehenden Trägerstreifens 12 legt der Trägerstreifen 12 sich an die Innenseite der Trommel 1 an. Hierdurch werden die Einsatzelemente 11 mit den Perforationen 3 sicher an ihrer vorgesehenen Position gehalten.

## Patentansprüche

1. Pneumatische Einzelkornsämaschine mit einem Saatgutvorratsbehälter und zumindest einer drehbar angeordneten Vereinzelungstrommel (1), deren Umfangsfläche kreisförmig angeordnet und zueinander beabstandete Perforationsreihen (2) mit Perforationen (3) angebracht sind, einem Gebläse, mittels welchem eine Druckdifferenz zwischen dem Innenraum (4) der Vereinzelungstrommel (1) und dem Außenbereich (5) der Vereinzelungstrommel erzeugbar ist, so dass, wenn die Vereinzelungstrommel (1) durch den Saatgutvorrat geführt wird, sich an den Perforationen (3) der Vereinzelungstrommel (1) Samenkörner anlagern, wobei auf der der Vereinzelungsseite bzw. dem Außenbereich (5) abgewandten Seite der Trommel (1), eine die an den Perforationen (3) anliegende Druckdifferenz zum Ablösen der Samenkörner unterbrechende Abdeckeinrichtung (7) angeordnet ist, wobei die Abdeckeinrichtung im Bereich der Übergabe der Samenkörner von der Trommel (1) in die zugeordneten Ausbringleitungen angeordnet ist, wobei in der Trommel (1) Durchbrüche (16) angebracht sind, wobei die Perforationen (3) in Einsatzelemente (11) angeordnet sind, wobei die die Perforationen (3) aufweisenden Einsatzelemente (10) in den Durchbrüchen (10) angeordnet sind, wobei die Einsatzelemente (11) mit einem ringförmigen Trägerstreifen (12) verbunden sind, **dadurch gekennzeichnet, dass** der Trägerstreifen (12) aus Federstahl besteht, dass in dem Tragerstreifen (12) Durchbrüche (13) mit einem mindestens zweifach größeren Querschnitt als die Perforationen (3) angeordnet sind, dass in den Durchbrüchen (13) des Trägerstreifens (12) die die Perforation (3) aufweisenden und aus einem Kunststoffmaterial bestehenden Einsatzelementen (11) angeordnet sind.

2. Einzelkornsämaschine nach Anspruch 1, **dadurch gekennzeichnet, dass** die Einsatzelemente (11) die Durchbrüche (13) in den Trägerstreifen (12) auf der Innen- und Außenseite mit an ihnen angeordneten Ansätzen (14,15) überragen.

3. Einzelkornsämaschine nach Anspruch 1, **dadurch gekennzeichnet, dass** die Einsatzelemente (11) auf der Innenseite des Trägerstreifens (12) in Drehrichtung der Trommel (1) formschlüssig, ineinander und in überlappender Weise zueinander angeordnet sind, dass zwischen den ineinandergreifenden Teilbereichen (15) der Einsatzelemente (11) ein freier Zwischenraum (16) vorhanden ist.

4. Sämaschine nach Anspruch 1, **dadurch gekennzeichnet, dass** die Enden (17) des Trägerstreifens (12) zur Bildung eines Ringes durch eine Formschlussverbindung (18) formschlüssig miteinander verbindbar sind.

5. Einzelkornsämaschine nach Anspruch 1, **dadurch gekennzeichnet, dass** die Durchbrüche (13) in dem Trägerstreifen (12) eine unrunde Form aufweisen.

## Claims

1. Pneumatic single grain seed drill having a seed storage container and at least one rotatably arranged singling drum (1), in the circumferential surface of which there are provided circularly arranged and mutually spaced-apart rows (2) of perforations (3), a fan, by means of which a pressure difference between the interior (4) of the singling drum (1) and the exterior region (5) of the singling drum is creatable, such that, when the singling drum (1) is guided through the seed store, grains are taken up at the perforations (3) in the singling drum (1), wherein a covering device (7) for interrupting the pressure difference applied at the perforations (3) in order to detach the grains is arranged on that side of the drum (1) that is remote from the singling side or from the exterior region (5), wherein the covering device is arranged in the region of the transfer of the grains from the drum (1) into the associated dispensing lines, wherein apertures (10) are provided in the drum (1), wherein the perforations (3) are arranged in insert elements (11), wherein the insert elements (11) having the perforations (3) are arranged in the apertures (10), wherein the insert elements (11) are connected to an annular carrier strip (12), **characterized in that** the carrier strip (12) consists of spring steel, **in that** apertures (13) having a cross section that is at least twice as large as the perforations (3) are arranged in the carrier strip (12), and **in that** the insert elements (11) having the perforations (3) and consisting of a plastics material are arranged in the apertures (13) in the carrier strip (12).

2. Single grain seed drill according to Claim 1, **characterized in that** the insert elements (11) protrude beyond the apertures (13) in the carrier strips (12) on the inner and outer side by way of attachments (14, 15) arranged on said insert elements (11).

3. Single grain seed drill according to Claim 1, **characterized in that** the insert elements (11) are arranged on the inner side of the carrier strip (12) in a form-fitting manner, in one another and in a manner overlapping one another, in the direction of rotation of the drum (1), and **in that** a free intermediate space (16) is present between the sub-regions (15), engaging in one another, of the insert elements (11).

4. Seed drill according to Claim 1, **characterized in that** the ends (17) of the carrier strip (12) can be connected together in a form-fitting manner in order to form a ring by way of a form-fitting connection (18).

5. Single grain seed drill according to Claim 1, **characterized in that** the apertures (13) in the carrier strip (12) have a non-round shape.

## Revendications

1. Semoir monograine pneumatique comprenant un réservoir de semence et au moins un tambour de séparation (1) disposé de manière rotative, sur la surface périphérique duquel sont pratiquées des rangées de perforations espacées les unes des autres (2) avec des perforations (3) et disposées sous forme circulaire, une soufflante, au moyen de laquelle une différence de pression peut être produite entre l'espace interne (4) du tambour de séparation (1) et la région extérieure (5) du tambour de séparation, de telle sorte que lorsque le tambour de séparation (1) est guidé à travers la réserve de semences, des graines de semences s'accumulent au niveau des perforations (3) du tambour de séparation (1), un dispositif de recouvrement (7) interrompant la différence de pression appliquée aux perforations (3) pour décoller les graines de semence étant disposé sur le côté du tambour (1) opposé au côté de séparation ou à la région extérieure (5), le dispositif de recouvrement étant disposé dans la région du transfert des graines de semence depuis le tambour (1) dans les conduites de distribution associées, des orifices (10) étant pratiqués dans le tambour (1), les perforations (3) étant disposées dans des éléments d'insertion (11), les éléments d'insertion (11) présentant les perforations (3) étant disposés dans les orifices (10), les éléments d'insertion (11) étant connectés à une bande de support de forme annulaire (12), **caractérisé en ce que** la bande de support (12) se compose d'acier à ressort, **en ce que** des orifices (13) sont disposés dans la bande de support (12) avec une section transversale au moins deux fois plus grande que celle des perforations (3), et **en ce que** dans les orifices (13) de la bande de support (12) sont disposés les éléments d'insertion (11) présentant les perforations (3) et constitués de matière plastique.

2. Semoir monograine selon la revendication 1, **caractérisé en ce que** les éléments d'insertion (11) dépassent des orifices (13) dans les bandes de support (12) du côté intérieur et extérieur avec des parties saillantes (14, 15) disposées au niveau de ceux-ci.

3. Semoir monograine selon la revendication 1, **caractérisé en ce que** les éléments d'insertion (11) sont disposés sur le côté intérieur de la bande de support (12) par engagement positif dans la direction de rotation du tambour (1) les uns dans les autres et de manière à se chevaucher les uns les autres, et **en ce qu'**entre les régions partielles venant en prise les unes dans les autres (15) des éléments d'insertion (11) est prévu un espace intermédiaire libre (16).

4. Semoir selon la revendication 1, **caractérisé en ce que** les extrémités (17) de la bande de support (12) peuvent être connectées par engagement positif l'une à l'autre pour former une boucle par une connexion par engagement positif (18).

5. Semoir monograine selon la revendication 1, **caractérisé en ce que** les orifices (13) dans la bande de support (12) présentent une forme non ronde.
